Europäisches Patentamt

European Patent Office

Office européen des brevets

(19)

(11) EP 0 970 823 A2

(12) EUROPEAN PATENT APPLICATION

(43) Date of publication:
12.01.2000 Bulletin 2000/02

(51) Int Cl.⁷: B60C 23/06

(21) Application number: 99305436.0

(22) Date of filing: 08.07.1999

(84) Designated Contracting States:
**AT BE CH CY DE DK ES FI FR GB GR IE IT LI LU MC NL PT SE**
Designated Extension States:
**AL LT LV MK RO SI**

(30) Priority: **09.07.1998 JP 19414198**

(71) Applicants:
• **SUMITOMO RUBBER INDUSTRIES, LTD.**
  **Hyogo-ken (JP)**
• **SUMITOMO ELECTRIC INDUSTRIES, LTD.**
  **Osaka-shi, Osaka-fu (JP)**

(72) Inventors:
• **Yanase, Minao**
  **Kobe-shi, Hyogo-ken (JP)**
• **Oshiro, Yuji**
  **Kakogawa-shi, Hyogo-ken (JP)**

(74) Representative: **Stewart, Charles Geoffrey**
**Technical,**
**Dunlop Tyres Ltd.,**
**Fort Dunlop**
**Erdington, Birmingham B24 9QT (GB)**

(54) **Apparatus for identifying tyres and method thereof**

(57)     An apparatus for identifying between summer tyres and winter tyres based on rotational information obtained from tyres attached to a four-wheeled vehicle equipped with a limited slip differential device (7). The apparatus comprises a rotational information detecting means (1) for detecting rotational information for each of the tyres, a memory means for storing rotational information of each of the tyres, an arithmetic processing means for respectively calculating reciprocals of rolling radii based on rotations information of tyres attached to a driving shaft (5) as well as judged value based on rotational information of each of the tyres, and an identification means for identifying whether the tyres attached to the driving shaft are summer tyres or winter tyres from a relationship between reciprocals of turning radii and the judged value.

FIG. 1

Printed by Jouve, 75001 PARIS (FR)

**Description**

The present invention relates to an apparatus for identifying tyres and a method thereof. More particularly, it relates to an apparatus for identifying tyres on a vehicle wherein it is identified whether the tyres are summer tyres or winter tyres for the purpose of improving performance and safety of a vehicle equipped with a limited slip differential device (LSD).

Since longitudinal grooves and vertical grooves are provided in a tyre tread pattern for water drainage, there are formed rubber blocks surrounded by these grooves. A block of large size is hardly deformed by vehicle forces due to its high shear strength in the lateral and longitudinal directions and thus present high rigidity. A tyre having a tread pattern which comprises such large blocks is called a tyre of large pattern rigidity.

Since cornering power, cornering force as well as slip rate are largely affected by the degree of pattern rigidity, it is required to know the pattern rigidity of tyres in order to estimate the behaviour of a vehicle particularly when the vehicle is equipped with a means for improving the performance and safety of the vehicle by utilising rotational information of the tyre and wheels such as ABS (anti-lock braking system), TCS (traction control system) or NAVI (Navigation system). Generally, the pattern rigidity of a summer tyre is large and that of a winter tyre small.

It is also now known that a decrease in tyre air-pressure results in a smaller dynamic load radius of the tyres so that the rotational speed becomes faster than compared to those of tyre of normal air-pressure. Japanese Unexamined Patent Publication No 149119/1995 discloses one example of a method for detecting decrease in internal pressure based on relative differences in the number of revolutions of tyres. Further, since the rotation speed of tyres is affected by many factors such as turning movement, acceleration or deceleration, load or speed of the vehicle, various systems have been devised to eliminate the influence of these factors.

However, among current vehicles there are some that are equipped with a limited slip differential device for the purpose of improving running performances. Due to the mechanism of such a limited slip differential device, differentiation is restricted until the differential torque exceeds a set value, and so the right and left driving wheels are in general rotated at equal speeds. Due to this arrangement, influences of decreases in air pressure are not reflected in the number of revolutions so that a pressure loss condition cannot be detected based on relative comparison of the number of revolutions.

While tuning of an apparatus for detecting and alarming a decrease in tyre air pressure which is controlled by rotational information of its tyres is suitable for tyres attached to a new car, it is conventionally the case that estimations of behaviours of the vehicle become very different from the initially tuned values if tyres are changed from summer tyres to winter tyres or, vice versa, from winter tyres to summer tyres, since these largely differ from each other in their specifications. Consequently, there is a danger that no correct information to be transmitted to the driver can be secured.

The present invention has been made in view of these circumstances, and it is an object thereof to provide an apparatus for identifying tyres and a method thereof with which it is possible to identify whether the tyres are summer tyres or winter tyres on a vehicle equipped with a limited slip differential device.

Accordingly to one object of the present invention, there is provided an apparatus for identifying between summer tyres and winter tyres based on rotational information that can be obtained from tyres attached to a four-wheeled vehicle equipped with a limited slip differential device, wherein the apparatus comprises a rotational information detecting means for detecting rotation information of each of the tyres, a memory means for storing rotational information of each of the tyres, an arithmetic processing means for respectively calculating reciprocals of rolling radii based on rotational information of tyres attached to a driving shaft from among rotational information of each of the tyres as well as judged values based on rotational information of each of the tyres, and an identification means for identifying whether the tyres attached to the driving shaft are summer tyres or winter tyres from a relationship between the reciprocals of the rolling radii and the judged values.

In accordance with the present invention, there is also provided a method for identifying between summer tyres and winter tyres based on rotational information that can be obtained from tyres attached to a four-wheeled vehicle equipped with a limited slip differential device, wherein it is identified whether tyres attached to the driving shaft are summer tyres or winter tyres from a relationship between reciprocals of rolling radii as calculated from rotational information of tyres attached to the driving shaft of the four-wheeled vehicle and judged values as calculated from rotational information of tyres attached to the four-wheeled vehicle.

Further aspects of the invention will be apparent from the following description, by way of example only, of an embodiment in which:

Figure 1 is a block diagram showing an apparatus for alarming decrease in tyre air-pressure related to the present invention,;
Figure 2 is a block diagram showing the electrical arrangements of the apparatus for alarming decrease in tyre air-pressure of Figures 1;
Figure 3 is a schematic diagram showing the relationship between reciprocals of rolling radii and judged values as calculated from differences between right and left following wheels;

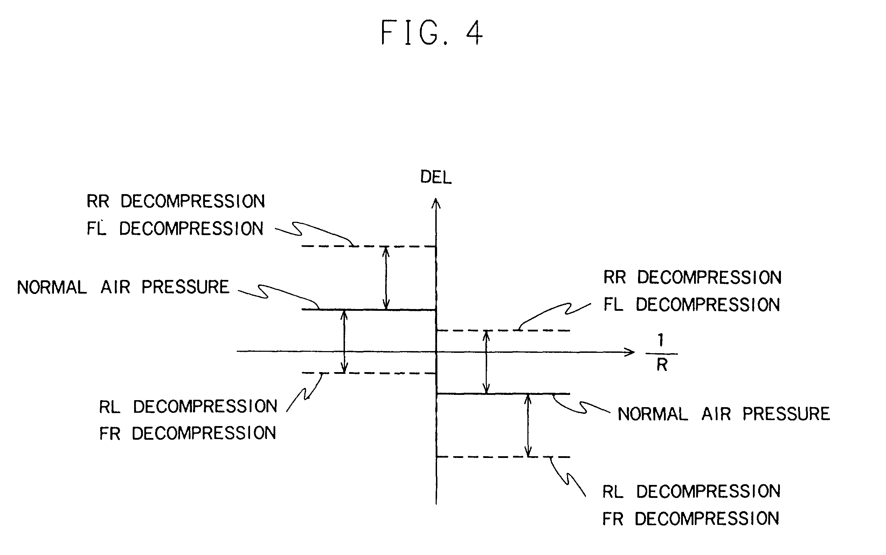

Figure 4 is a schematic diagram showing the relationship between reciprocals of rolling radii and judged values as calculated from differences between right and left driving wheels;

Figure 5 is a diagram showing the relationship between lateral G values and judged values in the case of summer tyres and employing average factors;

Figure 6 is a diagram showing the relationship between lateral G values and judged values in the case of winter tyres and employing average factors;

Figure 7 is a diagram showing the μ-s characteristics of summer tyres and those of winter tyres;

Figure 8 is a diagram showing the relationship between reciprocals of rolling radii of driving wheels and judged values in the case of winter tyres;

Figure 9 is a diagram showing the relationship between reciprocals of rolling radii of driving wheels and judged values in the case of summer tyres; and

Figure 10 is a flowchart showing an example for using the apparatus for identifying a tyre.

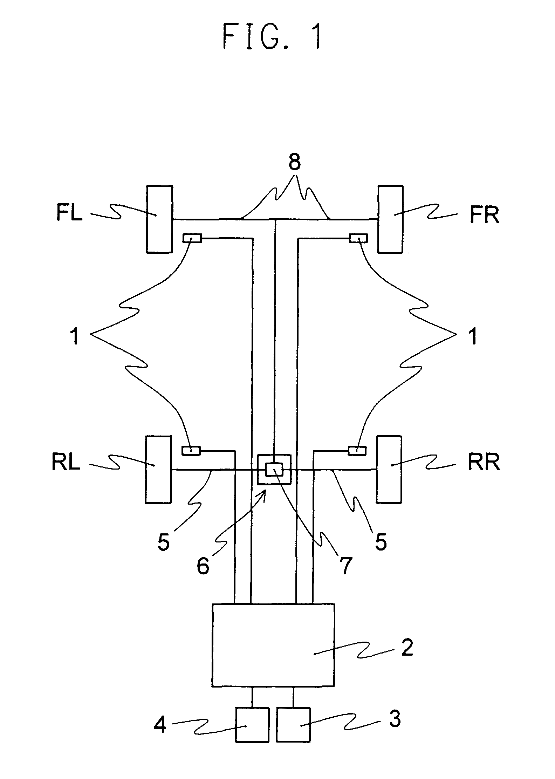

By first identifying whether tyres attached to a four-wheeled vehicle equipped with a limited slip differential device are summer tyre or winter tyres, it becomes possible to perform suitable judgements for either the summer tyres or winter tyres, to perform accurate judgements of internal pressure loss in tyres on a vehicle, and it is therefore applicable as an apparatus for generating an alarm. The example of an apparatus for alarming decrease in tyre air-pressure shown in Figure 1, detects whether the air-pressure of any of four tyres FL, FR, RL or RR attached to a four-wheeled vehicle has decreased or not, and includes ordinary wheel speed sensors 1 that are provided in connection with each of the tyres FL, FR, RL and RR. Each of the wheel speed sensors 1 performs detection of rotational information of the tyres such as the number of revolutions, the rotational speed or angular speed.

Outputs from the wheel speed sensors 1 are supplied to a control unit 2. To this control unit 2, there are connected a display means 3 comprising liquid crystal display elements, a plasma display element or CRT which serve to indicate either of the tyres FL, FR, RL or RR of which air-pressure has decreased, and an initialising switch 4 that can be operated by a driver. A limited slip differential device 7 is associated with a differential gear 6 connected to drive shafts 5. Note that 8 denotes a non-drive axle.

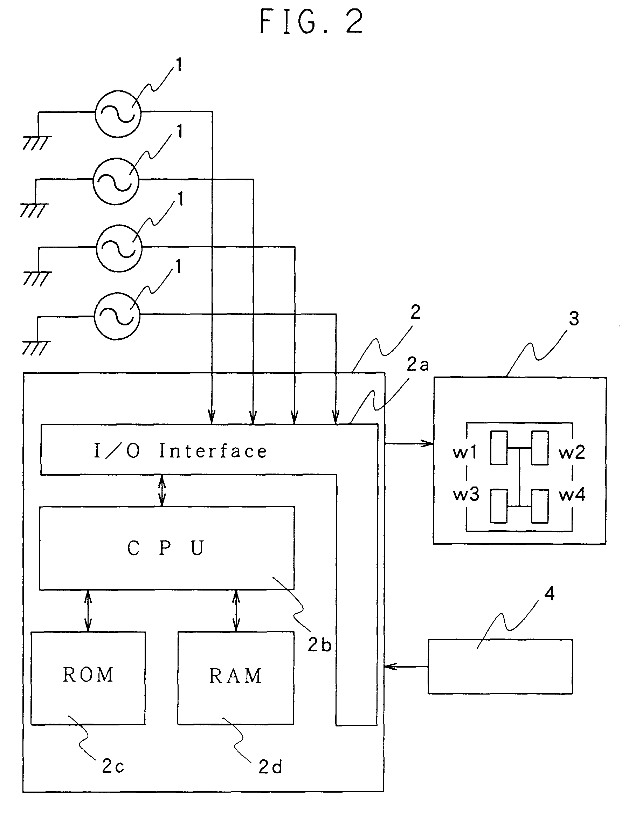

As shown in Figure 2, the control unit 2 is composed of an I/O interface 2a required for sending/receiving signals to and from an exterior device, a CPU 2b functioning as a centre of arithmetic processing, a ROM 2c storing therein a control operation program for the CPU 2b, and a RAM 2d into which data are temporarily written in or from which the written-in data are read in case the CPU 2b performs control operations. It should be noted that in this embodiment, each of the wheel speed sensors 1 corresponds to the rotational information detecting means and the control unit 2 to the memory means, arithmetic processing means and identifying means.

The arithmetic processing and identification in the present invention for a case in which the judged value (DEL value) is set to be a difference between two diagonal sums of rotational information values will now be explained.

Since right and left driving wheels (tyres) are rotated at equal speed until a vehicle turning movement is performed in which the torque exceeds the predetermined differential limiting torque is generated, a DEL value obtained from the following equation (1) is only then proportional to a difference in rotation speed between right and left following wheels.

$$DEL = \frac{\frac{V_{(1)} + V_{(4)}}{2} - \frac{V_{(2)} + V_{(3)}}{2}}{\frac{V_{(1)} + V_{(2)} + V_{(3)} + V_{(4)}}{4}} \times 100 \qquad (1$$

Her, $V_{(x)}$ denotes the rotational speed of a tyre (m/sec), and x:1=front left tyre, 2-front right tyre, 3=rear left tyre and 4=rear right tyre, respectively.

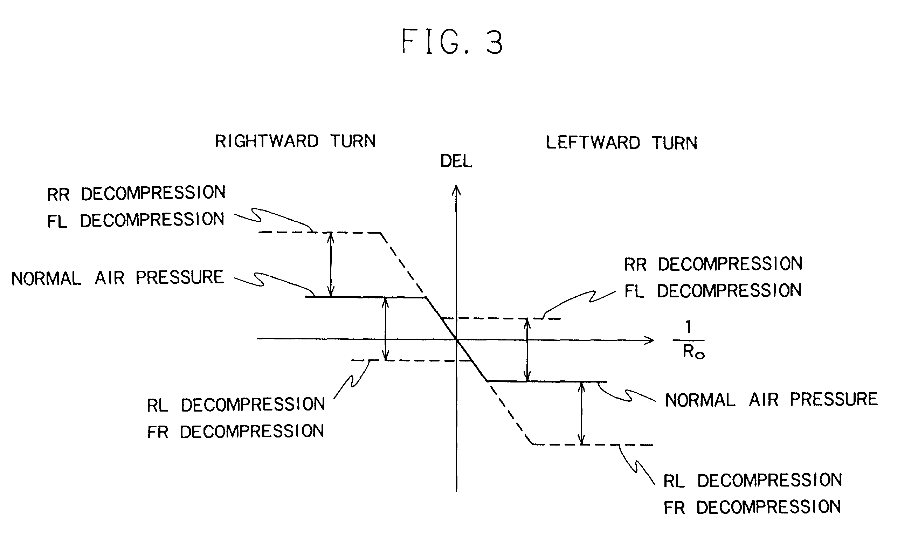

Unless the vehicles is driving on a special road surface, the differential torque is dependent on the turning radius. Thus, in case a reciprocal $1/R_o$ of a turning radius $R_o$ is calculated based on the difference in rotational speed between right and left following wheels from the following equation (2) and the DEL value is set to be a judged value for decompression, the DEL value will just correspond to the difference between the right and left following wheels when the differential is restricted as shown in Figure 3, and when exceeding a set differential torque, the DEL value will become substantially constant.

$$\frac{1}{R_0} = \frac{1}{T_w} \times \frac{V_{(1)} - V_{(2)}}{V_{ave}} \qquad (2)$$

Here, $T_w$ denotes a tread width and $V_{ave}$ an average value between right and left tyres.

In such a relationship between the reciprocals of the turning radii of the following wheels $1/R_o$ and the DEL values, a decompression in the driving wheels will result in a shift of a central turning radius of right and left driving wheels the differential of which is limited and a decompression in the following wheels will result in a shift of the whole calculation of the turning radius itself. Consequently, parallel displacement of the DEL values in a vertical direction will occur along a line of the difference between right and left following wheels (diagonal line). Therefore, determination of decompression needs to be performed by comparing respective horizontal portions in a condition of an ordinary air-pressure and in a decompressed condition. For this purpose, it is necessary to identify where the horizontal portion actually starts in both of these conditions. However, it is quite difficult to specify such horizontal portions (areas) since these horizontal portions vary according to variations in characteristics of the tyres such as differences in their material, size or rigidity as well as to the amount of decompression of the tyre.

By taking the reciprocals of the turning radii of the following wheels 1/ $R_o$ as calculated by using the driving shaft on the lateral axis (X axis), DEL values are made to be focused on spots where the lateral axis is 0, that is, on the longitudinal axis (Y axis), regardless of the presence or absence of decompression or the position thereof in the case where the differential is limited. Therefore, by performing comparison of judged values at horizontal portions that are somewhat remote therefrom, decompression can be easily determined.

While it has been explained that the DEL values become horizontal when the turning radii exceeded a certain value and the limited slip differential device has started operations, it will still be varied depending on the speed or the driving force of the vehicle or lateral acceleration (lateral G) so that it is required to perform correction also at this point. For example, variations in DEL values owing to load movement or driving force at the time of performing turning movements or sensitivity correction of DEL values owing to speed can be adjusted by performing corrections which are based on preliminary investigations, through performing tuning of vehicles, of their influences, whereby variations in the DEL values can be limited to improve the accuracy.

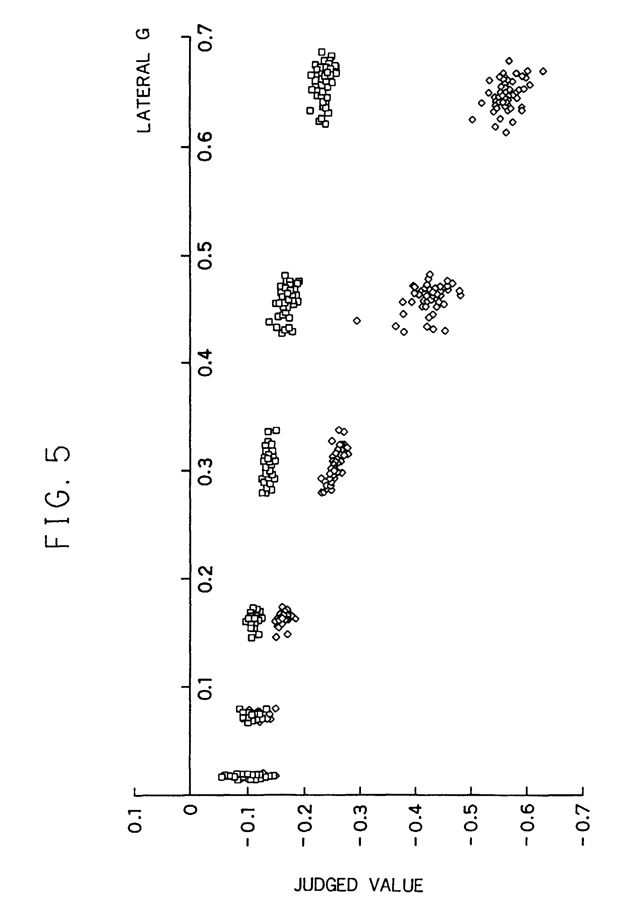

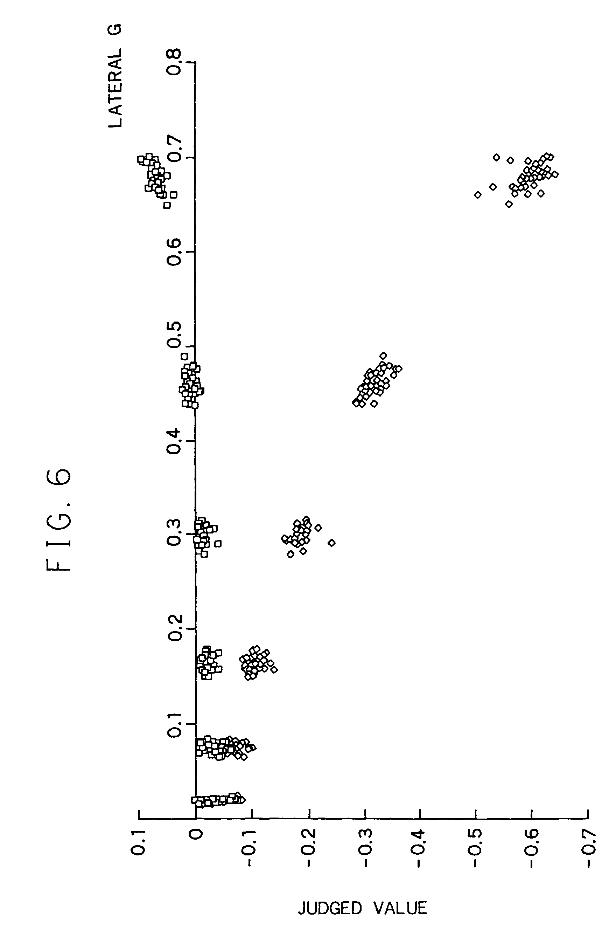

In the case of performing tuning of a vehicle, respective factors of summer tyres and winter tyres such as cornering correction coefficients or speed sensitivity correction coefficient are preliminarily obtained at the time of initialisation driving, and average values thereof are set as average factors. For instance, cornering correction is performed to perform correction as to obtain judged values regardless of the degree of lateral G, since the judged values are varied accompanying the increase in the lateral G owing to factors such as load movement or slip during cornering as shown by ◇ marks (actually measured values) in Figure 5 and Figure 6.

In the case of employing average factors when performing cornering correction, correction cannot be sufficiently performed for winter tyres as shown by □ marks in Figure 5, and excessive correction is performed in the case of summer tyres as shown by □ marks in Figure 6, so that no accurate correction can be performed. This, constraints (thresholds) of reject for the lateral G need to be set strictly (for instance, the threshold of reject for the lateral G needs to be set to 0.2 in the case of Figures 5 and 6) so that the amount of data available for the determination of generating alarm will be decreases. Consequently, in the case of performing initialisation by using average factors (correction coefficients) of summer tyres and winter tyres, a large amount of data is required at the time of actual driving following the initialisation, and it will take longer to determine generation of alarm.

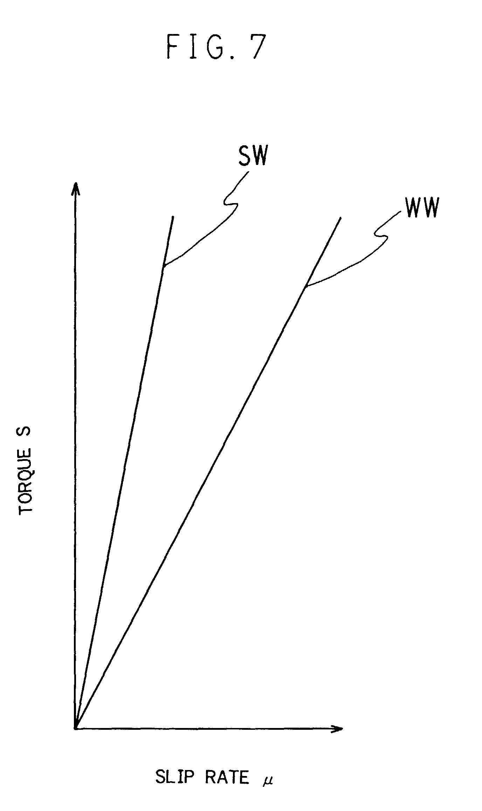

Therefore, the present invention identifies whether the tyres are summer tyres or winter tyres. Winter tyres are those of which tread patterns or materials have been changed in order to enable driving on snowy road surfaces and are marked on the sidewalls with indications such as "SNOW" "M+S", "STUDLESS", "ALL WEATHER" or "ALL SEASON". Summer tyres are not marked with such indications unlike winter tyres. As shown in the schematic view of Figure 7, the slope of μ-s characteristics (torque-slip rate characteristics) of summer tyres differs from that of winter tyres. This indicates that the slip rate of a winter tyre WW is greater than that of a summer tyre for the same amount of torque. In other words, it indicates that slip is apt to occur with a winter tyre so that torque is not so well transmitted to and from the road surface.

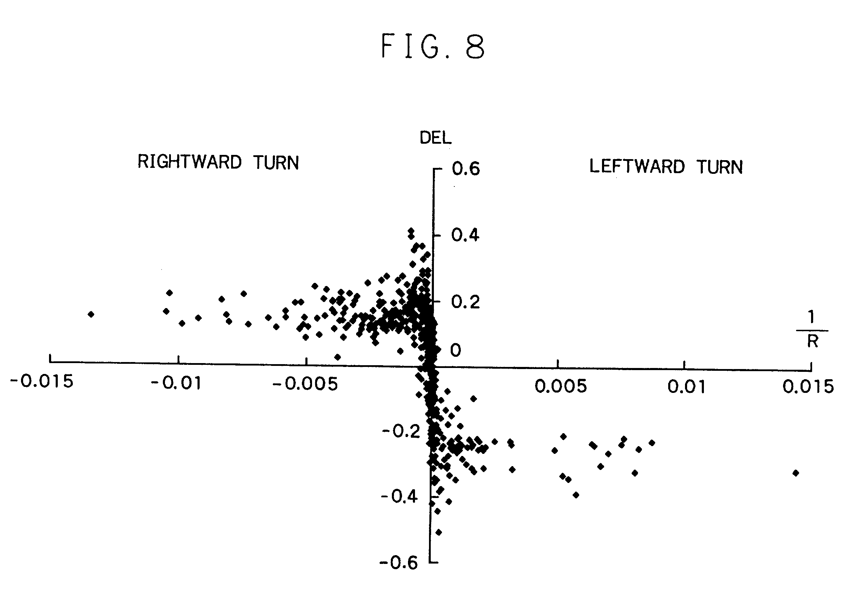

In a vehicle equipped with a LSD, the judged values will assume a hook-like shape as shown in Figure 8 with respect to the reciprocals of rolling radii as obtained from driving wheels in the case of, for instance, winter tyres. When a vehicle equipped with a LSD makes a turning movement, right and left driving wheels are made to run at identical speed until a specified torque difference is generated so that the handling differences in following or nondriven wheels just become the judged values in the proximity of the straight line (in a vehicle which is not equipped with LSD, the driving wheels will not be fixed so that the judged values obtained from difference between two diagonal sums of rotational information values of wheels will become 0). In case a specified torque difference is exceeded by the turning movement, the vehicle performs the turning while maintaining the differential difference, thereby the shape is assumed.

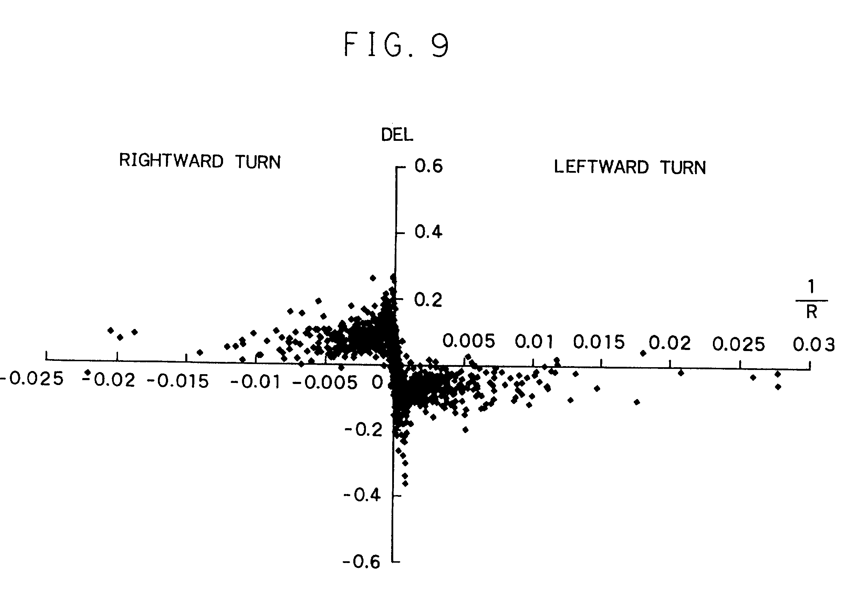

As is evident from the above two points, differentials are released owing to torque differences generated also from a large tuning radius since torque can be more easily transmitted from the road surface in case of summer tyres of large rigidity. On the other hand, in case of winter tyres of small rigidity, they are apt to slip so that torque is hardly transmitted, thus the differential is less likely to be released so that no differential difference is generated unless the turning radius is made smaller than that of summer tyres. Therefore, the judged values (DEL values) in the proximity of the straight line in case of winter tyres shown in Figure 8 become larger than the judged values (DEL values) in the proximity of the straight line in case of winter tyres shown in Figure 9. It can also be noted that the judged values in case the vehicle is making a left turn are different from those in case the same is making a right turn.

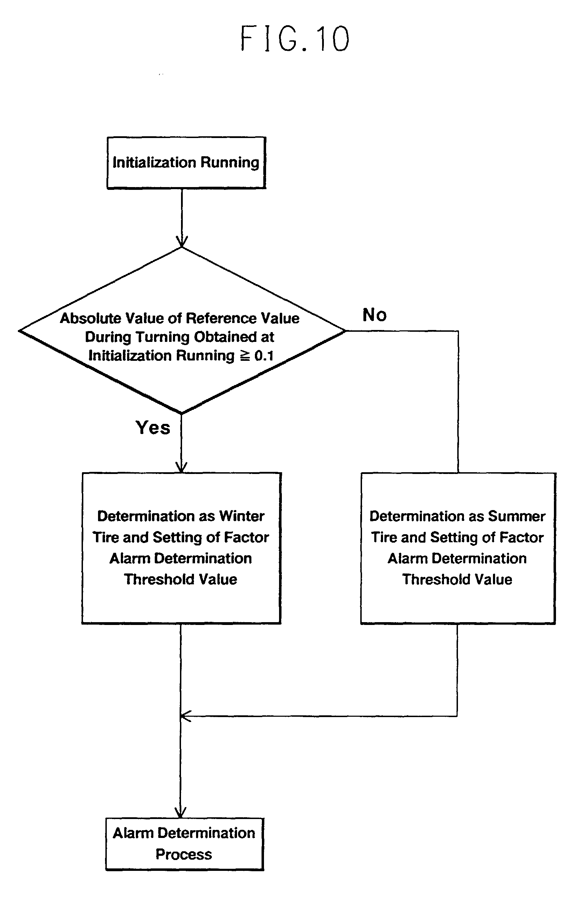

It can thus be understood that it is possible to distinguish summer tyres from winter tyres based on the magnitude of judged values. In an apparatus for alarming decrease in air-pressure provided in a vehicle equipped with a LSD, average values for judged values during straight-ahead driving, during a left turn and during a right turn are obtained at the time of performing initialisation driving under normal internal pressure to set these are reference values, and determination of decompression is performed based on the amount of shift therefrom. In the present embodiment, in the case of winter tyres, the reference value for the left turn is set to be -0.2197, the reference value for the left turn is set to be -0.0463 and the reference value for the right turn to be 0.0605. Thus, for identifying tyres, as shown in Figure 10, in the case the absolute values of reference values at the time of performing right and left turn are not less then 0.1, it can be determined that the tyres are winter tyres, and otherwise, that the tyres are summer tyres.

In this manner, since it is possible to identify whether the tyres attached to the driving shafts are summer tyres or winter tyres based on the relationship between reciprocals of turning radii and judged values, it is possible to generate an alarm by accurately determining a decrease in internal pressure of a tyre for each of the regions of the turning radii.

As explained so far, according to the present invention, it is possible to identify whether the tyres attached to a driving shaft are summer tyres or winter tyres based on the relationship between reciprocals of turning radii and judge values in a four-wheeled vehicle equipped with a limited slip differential device. In this manner, it is possible to accurately perform detection of decrease in tyre air-pressure since alarm is generated upon identification of the tyres.

**Claims**

1.  An apparatus for identifying between summer tyres and winter tyres based on rotational information that can be obtained from tyres attached to a four-wheeled vehicle equipped with a limited slip differential device, characterised in that the apparatus comprises a rotational detecting means (1) for detecting rotational information of each of the tyres, a memory means for storing rotational information of each of the tyres, an arithmetic processing means (2b) for respectively calculating reciprocals of rolling radii based on rotational information of tyres attached to a driving shaft (5) from among rotational information of each of the tyres as well as judged values based on rotational information of each of the tyres, and an identification beans for identifying whether the tyres attached to the driving shaft are summer tyres or winter tyres from a relationship between reciprocals of rolling radii and the judged values.

2.  A method for identifying between summer tyres and winter tyres based on rotational information that can be obtained from tyres attached to a four-wheeled vehicle equipped with a limited slip differential device, characterised in that it is identified whether tyres attached to a driving shaft (5) are summer tyres or winter tyres from a relationship between reciprocals of rolling radii as calculated from rotational information of tyres attached to a driving shaft of the four-wheeled vehicle and judge values as calculated from rotational information of tyres attached to the four-wheeled vehicle.

# FIG. 1

# FIG. 2

# FIG. 3

EP 0 970 823 A2

RIGHTWARD TURN      DEL      LEFTWARD TURN

RR DECOMPRESSION

FL DECOMPRESSION

NORMAL AIR PRESSURE

RR DECOMPRESSION

FL DECOMPRESSION

$\dfrac{1}{R_O}$

RL DECOMPRESSION

FR DECOMPRESSION

NORMAL AIR PRESSURE

RL DECOMPRESSION

FR DECOMPRESSION

FIG. 4

FIG. 5

FIG. 6

EP 0 970 823 A2

# FIG. 7

FIG. 8

EP 0 970 823 A2

# FIG. 9

DEL

RIGHTWARD TURN

LEFTWARD TURN

0.6

0.4

0.2

$\dfrac{1}{R}$

0.005  0.01  0.015  0.02  0.025  0.03

-0.025  -0.02  -0.015  -0.01  -0.005  0

-0.2

-0.4

-0.6

EP 0 970 823 A2

# FIG.10

```
┌──────────────────────┐
│ Initialization Running │
└──────────────────────┘
            │
            ▼
        ╱◇╲
   ╱         ╲        No
  ◇  Absolute Value of Reference Value  ◇ ──────┐
   ╲  During Turning Obtained at  ╱              │
    ╲ Initialization Running ≧ 0.1 ╱             │
        ╲◇╱                                      │
         │                                       │
        Yes                                      │
         │                                       │
         ▼                                       ▼
┌────────────────────────┐      ┌────────────────────────┐
│  Determination as Winter │      │ Determination as Summer │
│ Tire and Setting of Factor│     │ Tire and Setting of Factor│
│   Alarm Determination    │      │   Alarm Determination    │
│    Threshold Value       │      │    Threshold Value       │
└────────────────────────┘      └────────────────────────┘
         │                                       │
         │◄──────────────────────────────────────┘
         ▼
┌──────────────────────┐
│  Alarm Determination  │
│      Process          │
└──────────────────────┘
```

15